# EUROPÄISCHE PATENTSCHRIFT

(11) **EP 2 435 198 B1**
(45) Veröffentlichungstag und Bekanntmachung des Hinweises auf die Patenterteilung: **14.08.2013**
(21) Anmeldenummer: 10730106.1
(22) Anmeldetag: 27.05.2010
(51) Int. Cl.: B21D 43/12, B65G 15/00

(54) **FLEXIBLER NIEDERHALTER FÜR WALZPROFILIERANLAGEN**
FLEXIBLE HOLD-DOWN DEVICE FOR ROLL-FORMING INSTALLATIONS
SERRE-FLAN FLEXIBLE POUR INSTALLATIONS DE PROFILAGE CONTINU

(30) Priorität: 27.05.2009 DE 202009007527 U
(43) Veröffentlichungstag der Anmeldung: 04.04.2012
(73) Patentinhaber: Data M Sheet Metal Solutions GmbH, 83626 Valley/Oberlaindern (DE)
(72) Erfinder: SEDLMAIER, Albert, 83714 Miesbach (DE); FREITAG, Stefan, 82054 Sauerlach (DE); POKS, Bernard, 85354 Freising (DE); ABEE, André, 83626 Valley (DE)
(74) Vertreter: Farago, Peter Andreas
(86) Internationale Anmeldenummer: PCT/EP2010/057335
(87) Internationale Veröffentlichungsnummer: WO 2010/136531

(56) Entgegenhaltungen:
- EP-A1- 1 574 456
- EP-A2- 1 640 084
- DE-A1- 3 505 372
- DE-B3-102007 034 708
- JP-U- 49 070 123

## Beschreibung

Die Erfindung betrifft einen flexiblen Niederhalter für Walzprofilieranlagen, zum Klemmen eines zu profilierenden Bleches beim Walzprofilieren von Kalt- oder Warmprofilen mit veränderlichem Querschnitt, gemäß dem Oberbegriff von Anspruch 1.

Beim Walzprofilieren geben paarweise zusammen wirkende Walzen ein Profil vor, in dessen Form ein umzuformendes Blech gebracht wird. Im Allgemeinen erfolgt die Umformung des Bleches in mehreren Stufen mit mehreren Walzenpaaren bzw. Walzengerüsten. Der stufenweise Umformungsgrad des Bleches wird derart gewählt, dass das Blech nicht unerwünscht beansprucht und verformt wird.

Eine Vorrichtung zur Erzeugung von profilierten Blechen mit veränderlichem Querschnitt ist aus der DE 100 11 755 A1 bekannt. Darin ist ein Konzept offenbart, das neben der bislang beim Profilieren bekannten Verstellmöglichkeit quer zur Profilierrichtung zusätzlich eine Drehbewegung um die vertikale Achse ermöglicht. Dieses Konzept soll die Nachteile derjenigen Funktionsprinzipien beheben, bei denen eine Werkzeugbewegung, bei der die Walzen während der gesamten Profilierung tangential am Blech anliegen, nicht möglich ist. Durch die nicht ausschließlich quer zur Profilierrichtung erfolgende Verstellung der Walzen sollen eine einwandfreie Umformung erzielt und ungünstige Verformungen am Blech beseitigt werden.

Eine ähnliche Vorrichtung zur Erzeugung von profilierten Blechen mit veränderlichem Querschnitt ist aus der DE 10 2004 040 257 A1 bekannt. Die Vorrichtung verfügt über eine zusätzliche Walze und ein Stützelement, wobei die Rollen und Stützelemente des Walzengerüstes sicherstellen sollen, dass keine unzulässigen Verformungen am Blech auftreten.

Trotz dieser Vorkehrungen zur Erzielung einer einwandfreien Umformung kommt es vor, dass unerwünschte Verformungen am Boden des zu profilierenden Bleches auftreten und zu Abweichungen von der Ideallinie des Bodens führen. Diese unerwünschten Verformungen haben zur Folge, dass eine kontinuierlich definierte und kontrollierte Höhe des Bodens nicht erzielt werden kann. Dadurch kommt es zu Abweichungen von der Ideallinie des Bodens, die zu inakzeptablen Schwankungen bei den Produkten führen.

In der DE 10 2007 034 708 B3 ist ein flexibler Niederhalter beschrieben, mit dem die oben beschriebenen Nachteile hinsichtlich der unerwünschten Verformungen beim flexiblen Profilieren unterbunden werden und ein umgeformtes Produkt mit kontinuierlich definierter und kontrollierter Höhe des Bodens bereitgestellt wird.

JP 49070123 U beschreibt einem flexiblen Niederhalter mit den Merkmalen der Oberbegriffs von Anspruch 1.

Dieser bekannte flexible Niederhalter wird mit der in Anspruch 1 angegebenen Erfindung dahingehend verbessert, dass eine quasi kontinuierliche Klemmung des Bleches, bei dem sich die Breite des Blechquerschnitts entlang des Blehs ändert, ermöglicht wird und die hin und her gehenden Massen minimiert werden.

Somit ermöglicht eine mit dem erfindungsgemäßen flexiblen Niederhalter ausgestattete Profilieranlage insgesamt eine über eine bestimmte Länge quasi kontinuierliche und im Wesentlichen über die gesamte Länge der Profilieranlage greifende Klemmung.

Vorteilhafte Weiterbildungen der Erfindung sind in den anhängigen Ansprüchen gegeben.

Es folgt eine Beschreibung von flexiblen Niederhaltern nach dem Stand der Technik und von flexiblen Niederhaltern mit Endloselement gemäß der Erfindung anhand der Zeichnung, wobei das erfindungsgemäße Endloselement ein Element mit Förder- und/oder Führungseigenschaften ist. Darin zeigen:
Fig. 1 eine Seitenansicht eines bekannten flexiblen Niederhalters;
Fig. 2 eine Perspektivansicht einer oberen Klemmanordnung des flexiblen Niederhalters von Fig. 1 mit einer verstellbaren oberen Klemmbacke 2a mit einem anpassbaren Klemmschuh 2b;
Fig. 3 eine Perspektivansicht des flexiblen Niederhalters von Fig. 1, in eine Profilieranlage integriert;
Fig. 4 eine Perspektivansicht eines passiv angetriebenen flexiblen Niederhalters mit Endloselement;
Fig. 5 eine Perspektivansicht eines aktiv angetriebenen flexiblen Niederhalters mit Endloselement;
Fig. 6 eine Perspektivansicht eines aktiv angetriebenen flexiblen Niederhalters mit Endloselement und in der Breite verstellbaren Klemmschuhen;
Fig. 7a, 7b und 7c Schnittansichten und Draufsichten der Klemmschuhe der Ausführungsbeispiele von Figuren 4 bis 6;
Fig. 8a, 8b und 8c Perspektivansichten der in Fig. 7a, 7b bzw. 7c gezeigten Klemmschuhe; und
Fig. 9 eine Perspektivansicht des flexiblen Niederhalters von Fig. 6, in eine Profilieranlage integriert.

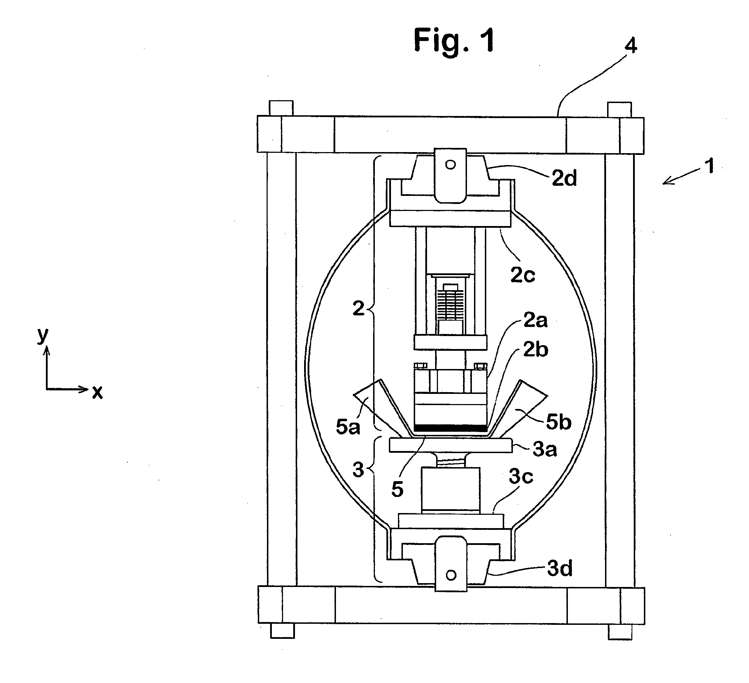

Fig. 1 zeigt einen aus der DE 10 2007 034 708 B3 bekannten flexiblen Niederhalter 1 für eine beliebige Profilieranlage. Der Niederhalter 1 schließt eine obere Klemmanordnung 2 und eine untere Klemmanordnung 3 ein, die ein zu profilierendes Blech 5 zwischen sich klemmen. Die beiden Klemmanordnungen 2, 3 sind über eine obere Führung 2d und eine untere Führung 3d in einem Rahmen 4 beweglich angebracht.

In einer Ausführungsform schließt die obere Klemmanordnung 2 eine Halterung 2c und eine verstellbare obere Klemmbacke 2a mit einem anpassbaren Klemmschuh 2b ein. Die untere Klemmanordnung 3 schließt eine Halterung 3c und eine verstellbare untere Klemmbacke 3a ein. Die Führungen 2d, 3d können als Schienenführungen, Walzenführungen, Schwalbenschwanzführungen, Prismenführungen, Schmalführungen oder zylindrische Führungen ausgestaltet sein. Die Ausgestaltung der oberen Führung 2d kann von jener der unteren Führung 3d verschieden sein. Obwohl nicht gezeigt, kann analog zum oberen Klemmschuh auch ein unterer Klemmschuh vorgesehen sein.

Die verstellbare obere Klemmbacke 2a kann vorteilhaft über eine hydraulische Hebelkraft in einer zum Blechvorschub senkrechten Richtung auf das zu profilierende Blech 5 und gegen die untere Klemmbacke 3a gepresst werden. Alternativ wird nur die Klemmbacke 2a über eine pneumatische oder eine elektromagnetische Hebelkraft gegen das Blech gepresst, wobei die untere Klemmbacke 3a durch eine Schraube auf eine vorgegebene Höhe einstellbar ist.

In einer Ausführungsform klemmen die Klemmanordnungen 2, 3 des flexiblen Niederhalters 1 das Blech beidseitig von oben und von unten. In einer anderen Ausführungsform klemmen die Klemmanordnungen 2, 3 das Blech umgreifend an einem oder beiden Schenkeln 5a, 5b.

In einer Ausführungsform werden die Klemmanordnungen 2, 3 des flexiblen Niederhalters 1 in dem Rahmen 4 auf den Führungen 2d, 3d mit dem Blechvorschub passiv, d. h. ohne einen eigenen Antrieb über Motoren, mitgezogen. Dadurch werden während des Profiliervorgangs keine zusätzlichen Kräfte in das Blech eingeleitet, so dass eine nahezu 100%-ige Übereinstimmung mit dem Blechvorschub gewährleistet wird. In einer anderen Ausführungsform werden die Klemmanordnungen 2, 3 in dem Rahmen 4 auf den Führungen 2d, 3d in Richtung des Blechvorschubs aktiv, d. h. mit einem eigenen Antrieb über Motoren, angetrieben. Allerdings ist bei dieser aktiven Mitführung der Klemmanordnungen 2, 3 eine Synchronisation mit dem Blechvorschub erforderlich. Auch sind Kombinationen von aktiven und passiven Führungen möglich.

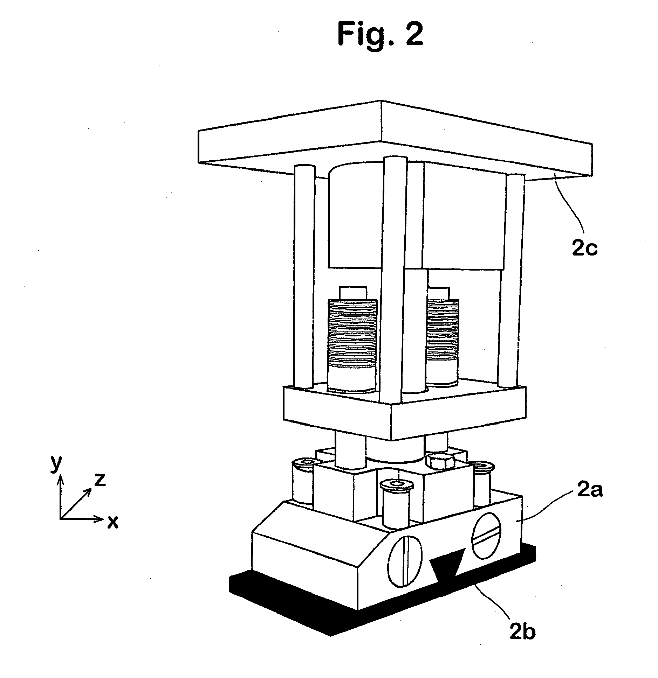

Fig. 2 zeigt eine obere Klemmanordnung 2 mit einer verstellbaren oberen Klemmbacke 2a mit einem anpassbaren Klemmschuh 2b. Es sind Mittel vorgesehen, um den Klemmschuh 2b während des Profiliervorgangs in der Vorschubebene (Ebene xz) oder senkrecht zur Vorschubebene (y-Richtung) anzupassen. Diese Mittel passen den Klemmschuh 2b in der Breite, Höhe, Form oder Position an das Profil des Bleches an, da bei dreidimensionalen Querschnitten, d. h. mit höhenveränderlichem Boden, die Klemmanordnung 2 dem Boden des Profils folgen und sich in der Höhe und Neigung anpassen muss. Falls das Blech an verschiedenen Seiten in Bezug auf den Boden gebogen wird, kann dafür gesorgt werden, dass diese Mittel an den entsprechenden Seiten des Bodens wirken. Durch diese Anpassung wird eine Kollision mit den Schenkeln 5a, 5b vermieden und das Blech keinen unerwünschten Verformungen ausgesetzt.

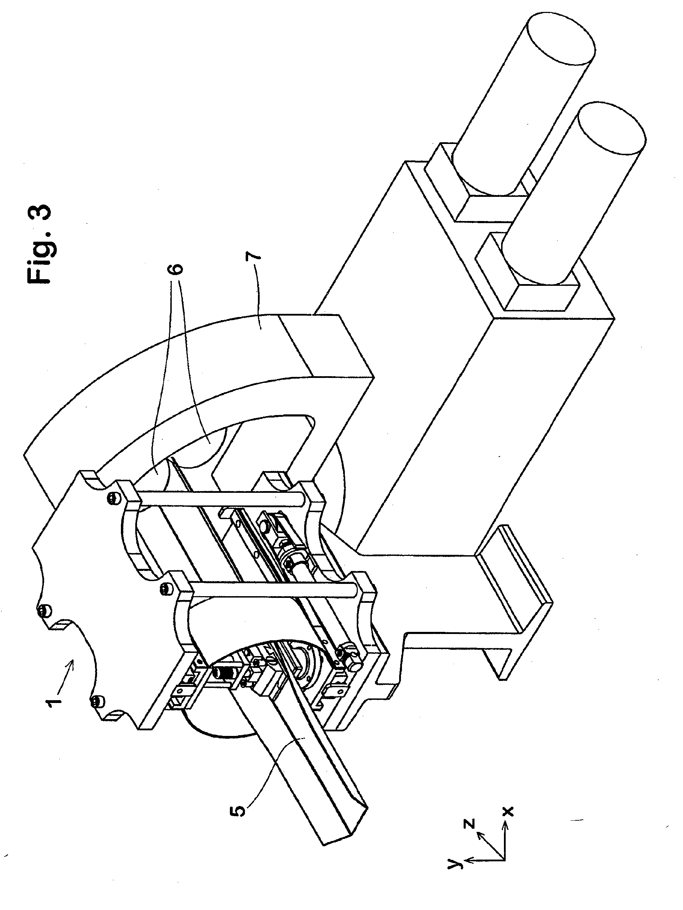

Fig. 3 zeigt den flexiblen Niederhalter 1 von Fig. 1, wie er in eine Profilieranlage integriert ist. In Fig. 3 ist nur ein Walzengerüst dargestellt, doch sind stromaufwärts und stromabwärts des Walzengerüstes weitere Walzengerüste vorhanden, die Teil einer Profilieranlage sind.

Ein Verfahren zum Profilieren eines Bleches 5 unter Verwendung des flexiblen Niederhalters 1 umfasst die nachfolgend beschriebenen Schritte. Im Schritt 1 wird das zu profilierende Blech 5 geklemmt. Dazu pressen die beiden Klemmanordnungen 2, 3 aus einer Ausgangsposition (Ruhelage) heraus an einer definierten Stelle das Profil des Bleches. Diese vorbestimmte Stelle wird im Voraus abhängig von der Art der Verformung und des verwendeten Blechmaterials sowie der Geometrie der Walzanlage bestimmt. Das Blech wird dabei beidseitig von oben und von unten geklemmt. Alternativ dazu kann das Blech umgreifend an einem oder beiden Schenkeln 5a, 5b geklemmt werden. Bei dem Klemmen des Bleches ist darauf zu achten, dass die Presskraft größer als die Verformungskraft der Klemmstelle ist. Ferner müssen sämtliche Freiheitsgrade bis auf den Freiheitsgrad der Profilierrichtung unterbunden werden, so dass keine Relativbewegung zwischen Blech und Niederhalter möglich ist. Dadurch können unerwünschte Verformungen des Bleches ausgeschlossen und eine kontinuierlich definierte und kontrollierte Höhe des Bodens erzielt werden.

Im Schritt 2 wird das geklemmte Blech 5 während der Profilierung unter linearem Mitführen der Klemmanordnungen 2, 3 in Profilierrichtung geführt. Dadurch bewegen sich die Klemmanordnungen 2, 3 mit dem zu profilierenden Blech 5 als eine Einheit mit. Die Klemmanordnungen 2, 3 können dabei mit dem Blechvorschub passiv mitgezogen werden. Die Einleitung von zusätzlichen Kräften in das Blech wird vermieden und eine nahezu 100%-ige Übereinstimmung mit dem Blechvorschub gewährleistet. Alternativ dazu können die Klemmanordnungen 2, 3 in Richtung des Blechvorschubs (der Profilierrichtung) aktiv über Motoren angetrieben werden. Bei dieser Mitführung der Klemmanordnungen 2, 3 ist jedoch eine Synchronisation mit dem Blechvorschub erforderlich. Hierdurch können ebenfalls unerwünschte Verformungen des Bleches ausgeschlossen und eine kontinuierlich definierte und kontrollierte Höhe des Bodens erzielt werden.

In diesem Schritt 2 ist es ferner bevorzugt, dass die Klemmanordnungen 2, 3 unter Klemmung des Bleches möglichst nahe an die formenden Rollen 6 des Walzengerüstes 7 herangeführt werden, um einen möglichst langen Führungsweg des Bleches und eine möglichst lange Kontaktzeit mit dem Blech zu haben.

Außerdem ist es in diesem Schritt 2 bei dreidimensionalen Querschnitten, also mit höhenveränderlichem Boden, bevorzugt, dass der Klemmschuh 2b während des Profiliervorgangs in der Breite, Höhe, Form oder Position an das Profil des Bleches 5 angepasst werden kann. Hierdurch wird eine Kollision mit den Schenkeln 5a, 5b vermieden. Die Klemmanordnung 2 kann somit dem Boden des Profils folgen und sich in der Höhe und Neigung anpassen. Dadurch können ebenfalls unerwünschte Verformungen des Bleches ausgeschlossen und kann eine kontinuierlich definierte und kontrollierte Höhe des Bodens erzielt werden.

Im Schritt 3 wird die Klemmung der mitgeführten Klemmanordnungen 2, 3 gelöst, wenn die geklemmte Stelle das nächste Walzengerüst 7 erreicht.

Im Schritt 4 werden die Klemmanordnungen 2, 3 in die Ausgangsposition (Ruhelage) zurück gebracht. Danach können die Schritte 1 bis 4 erneut durchgeführt werden.

Mit dem in eine Profilieranlage integrierten Niederhalter 1 können Bleche mit gleich bleibender Qualität aufgrund einer kontinuierlich definierten und kontrollierten Höhe des Bodens beispielsweise in der Automobilindustrie hergestellt werden, wobei die Einsatzmöglichkeiten nicht auf dieses Gebiet beschränkt sind. Dasselbe gilt für den nachfolgend beschriebenen flexiblen Niederhalter mit Endloselement, der im Wesentlichen dieselben Wirkungen hat wie der vorstehend beschriebene flexible Niederhalter, aber eine quasi kontinuierliche Klemmung des Bleches ermöglicht.

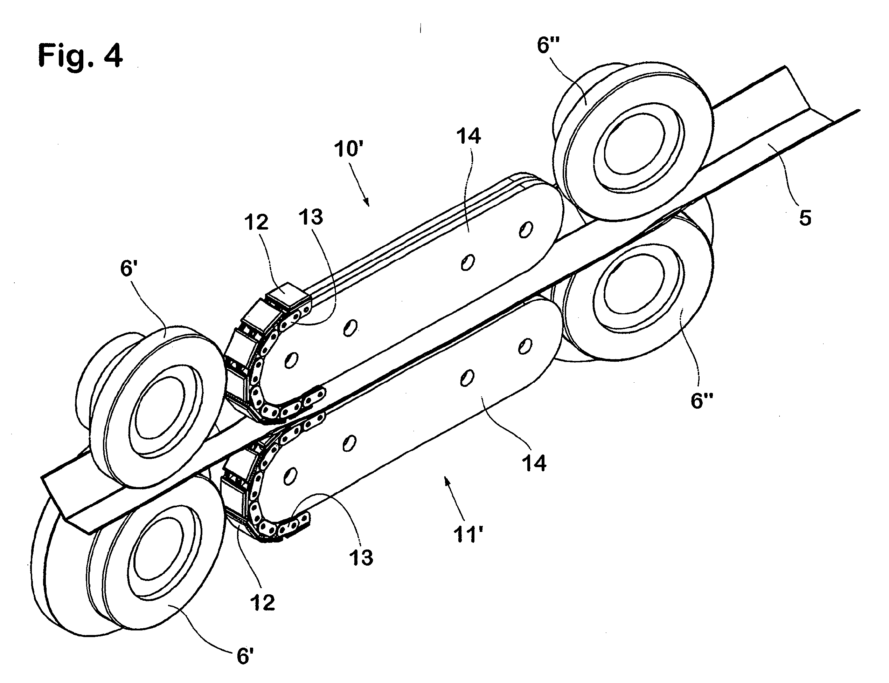

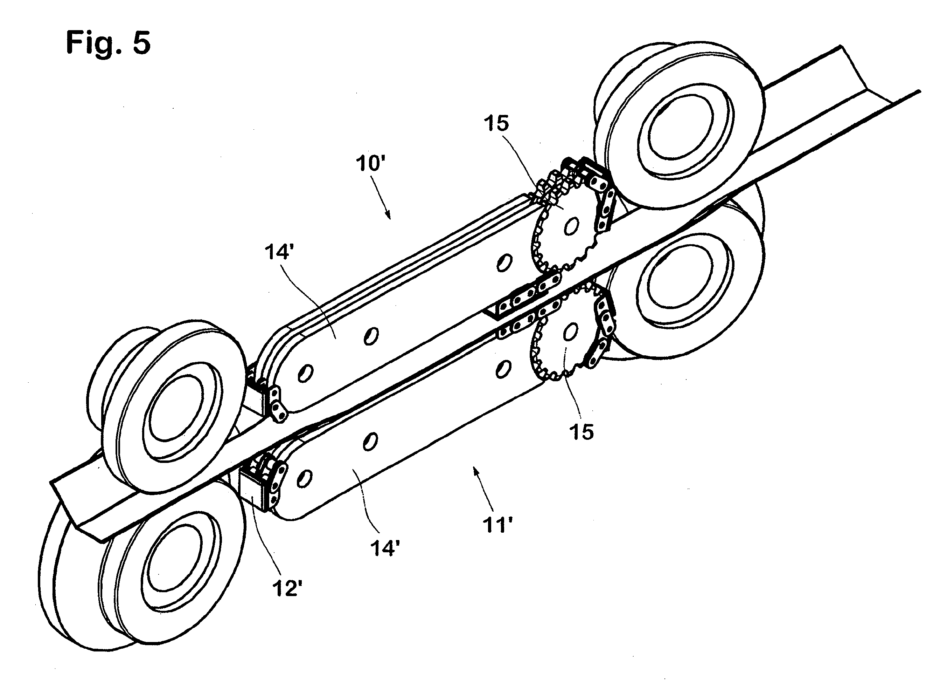

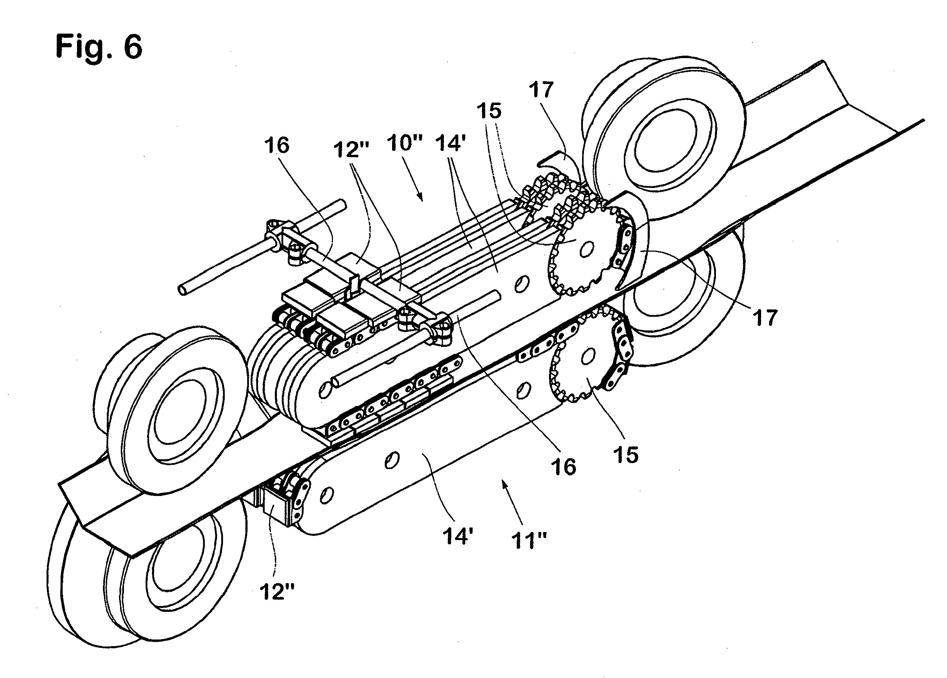

Figuren 4 bis 6 sind schematische Perspektivansichten von verschiedenen flexiblen Niederhaltern an einem Streifen Blech 5, das sich von links unten nach rechts oben in den Figuren bewegt, und zwar von einem Paar formende Rollen 6' eines ersten Walzengerüstes zu einem Paar formende Rollen 6" eines zweiten Walzengerüstes, wobei die Walzengerüste hier nicht gezeigt sind. Der Niederhalter umfasst jeweils eine obere Klemmanordnung und eine untere Klemmanordnung, die das Blech 5 an einer definierten Stelle klemmen. In allen Figuren haben gleiche oder ähnliche Bestandteile gleiche bzw. ähnliche Bezugszeichen, und in Figuren 5 und 6 sind Bezugszeichen für gleiche Bestandteile wie in Fig. 4 weggelassen.

Fig. 4 zeigt eine obere Klemmanordnung 10 und eine untere Klemmanordnung 11, die jeweils eine Anzahl von Klemmschuhen 12 umfassen, die jeweils ein Glied einer Rollenkette 13 bilden, wobei jeder Klemmschuh 12 zwei aufeinander folgende Rollen der Rollenkette 13 umfasst. Statt der Rollenkette 13 kann man auch irgendein anderes Endloselement verwenden, beispielsweise eine Gleiskette, ein biegsames Band oder einen Zahnriemen. In Figuren 4 bis 6 sind jeweils nur einige der Klemmschuhe 12 bzw. ist nur ein Abschnitt der Rollenkette 13 gezeichnet.

Die Rollenkette 13 einer jeden Klemmanordnung 10, 11 läuft mit geringem Spiel um ein Gleit-Führungselement 14 um, das z. B. ein gerades Stück Metall, Kunststoff oder kunststoffbeschichtetes Metall mit rechteckigem Querschnitt und halbkreisförmig konvexen Enden ist, welches sich von einer Stelle nahe an den formenden Rollen 6' des ersten Walzengerüstes bis zu einer Stelle nahe an den formenden Rollen 6" des zweiten Walzengerüstes erstreckt.

Indem die Klemmanordnungen 10, 11 das Blech von oben und von unten zwischen sich klemmen, laufen die Rollenketten 13 um die Gleit-Führungselemente 14 um, wenn das Blech 5 durch die Profilieranlage transportiert wird. Das heißt, die Klemmschuhe 12 und Rollenketten 13 werden passiv vom Blech 5 angetrieben. Dabei liegen immer einige der Klemmschuhe 12 am Blech 5 an, nämlich diejenigen Klemmschuhe 12, die sich gerade an dem das Blech 5 berührenden Trum der Rollenkette 13 befinden.

Die Außenseiten der Klemmschuhe 12 bezüglich der Gleit-Führungselemente 14 sind rechteckige ebene Platten. Quer zur Blechförderrichtung (der Profilierrichtung) dürfen sie nicht breiter sein als der schmalste niederzuhaltende Bodenteil des Profils.

Der in Fig. 5 gezeigte flexible Niederhalter ist dem in Fig. 4 gezeigten ähnlich, außer dass die Gleit-Führungselemente 14' der Klemmanordnungen 10', 11' an einem Ende nicht konvex ausgewölbt, sondern halbkreisförmig konkav ausgespart sind. In den gegenüber dem Ausführungsbeispiel von Fig. 4 ausgesparten kreisrunden Endbereichen der Gleit-Führungselemente 14' ist jeweils ein Doppelkettenrad 15 angeordnet und auf nicht gezeigte Weise motorisch drehbar gelagert, so dass ein aktiver Antrieb beider Klemmanordnungen 10', 11' realisiert wird. Jede Rollenkette 13 läuft um ein Doppelkettenrad 15 um und wird dadurch aktiv angetrieben, wobei der Antrieb synchron mit dem Blechvorschub erfolgt. Es ist jedoch erfindungsgemäß denkbar, dass nur eine der Klemmanordnungen 10', 11' aktiv angetrieben wird und die andere passiv mit dem Blechvorschub mitgezogen wird, so dass eine Kombination eines aktiven und passiven Antriebs bereitgestellt wird.

Zur Halterung und zum Antrieb der Klemmanordnungen 10', 11' in Fig. 5 kann der Einfachheit halber ein Walzengerüst von derselben Bauart verwendet werden, wie es auch zur Halterung und zum Antrieb der formenden Rollen 6' bzw. 6" verwendet wird, wobei jedoch diejenigen Antriebe des Walzengerüstes, die zur Translation und gemeinsamen Rotation der Rollen 6' bzw. 6" in verschiedenen Freiheitsgraden dienen, weggelassen werden können.

Bei dem in Fig. 6 gezeigten flexiblen Niederhalter sind oberhalb und unterhalb des Bleches 5 je zwei Klemmanordnungen 10", 11" angeordnet, die ebenso wie die Klemmanordnungen 10', 11' von Fig. 5 jeweils ein Gleit-Führungselement 14' und ein Doppelkettenrad 15 enthalten. Somit verlaufen je zwei Rollenketten 13 mit Klemmschuhen 12" nebeneinander. Es ist jedoch analog zur Ausführungsform der Fig. 5 denkbar, dass nur eine der Klemmanordnungen 10", 11" aktiv angetrieben wird und die andere passiv mit dem Blechvorschub mitgezogen wird, so dass eine Kombination von aktiven und passiven Antrieben bereitgestellt wird.

Erfindungsgemäß sind die Niederhalteplatten der Klemmschuhe 12" ein Stück weit quer zur Blechförderrichtung beweglich an den Klemmschuhen 12" montiert und können mit ersten Mittel wie z.B. den schematisch gezeichneten, motorgetriebenen Schiebern 16 quer zur Blechförderrichtung etwas auseinander geschoben werden. Dadurch kann die Breite der Niederhaltefläche im Verlauf des Profilierens an die Breite des niederzuhaltenden Bodenteils des Profils angepasst werden. Dies ist besonders für Profile mit in der Breite veränderlichem Querschnitt von Vorteil.

Der Zeitpunkt, in dem die Klemmschuhe 12" zu verstellen sind, ergibt sich aus der Distanz von den Schiebern 16 entlang der Rollenketten 13 bis zu der Stelle, an der die Klemmschuhe 12" mit einer Stelle des Bleches 5 in Kontakt kommen, an der sich dessen Querschnitt ändert, und der Blechfördergeschwindigkeit.

Seitlich der Doppelkettenräder 15 sind gebogene Rückstellbleche angebracht, welche die Klemmschuhe 12" durch ihre gebogene Gestalt wieder zusammenschieben, nachdem sie vom Blech 5 abgehoben haben.

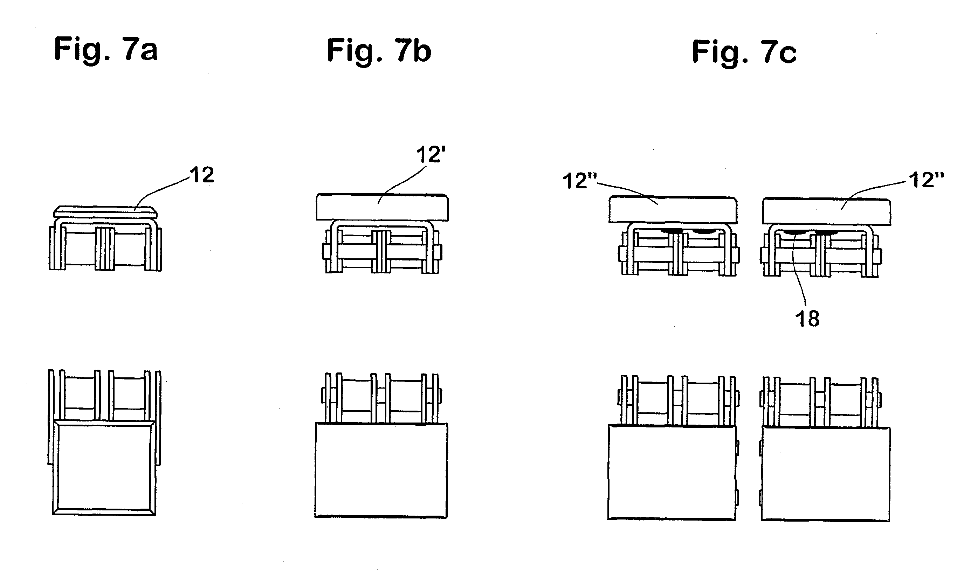

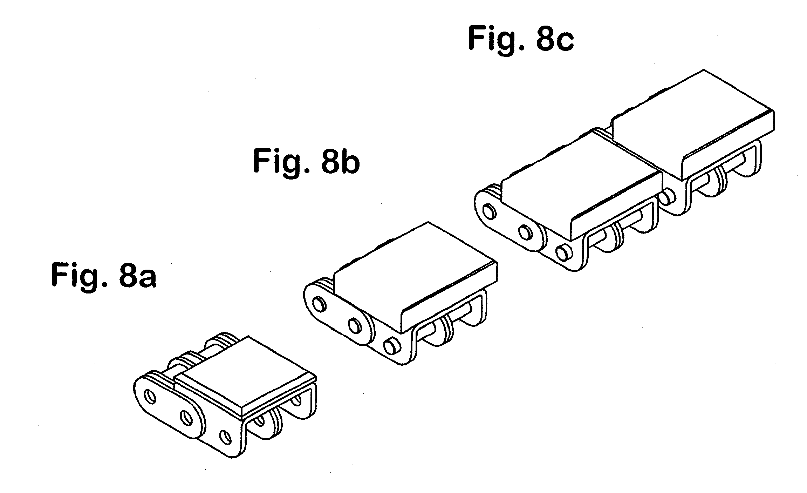

Fig. 7a, 7b und 7c zeigen oben Schnittansichten und unten Draufsichten jeweils eines Klemmschuhs 12, 12' und 12" gemäß den Ausführungsbeispielen von Figuren 4 bis 6, und Fig. 8a, 8b und 8c sind entsprechende Perspektivansichten. Man erkennt, dass die Niederhalteplatten der Klemmschuhe 12' und 12" dicker sind als jene des Klemmschuhs 12, um für mehr Abstand von den Kettengliedern zu sorgen, dass die Innenrollen der Kettenglieder der Klemmschuhe 12' und 12" einen kleineren Durchmesser als jene des Klemmschuhs 12 haben, so dass sie mit den Kettenrädern 15 in Eingriff kommen können, und dass die Klemmschuhe 12" seitlich verschiebbar angebracht sind, indem sie mit Nieten 18 befestigt sind, die durch Querschlitze in den Kettengliedern hindurchgehen.

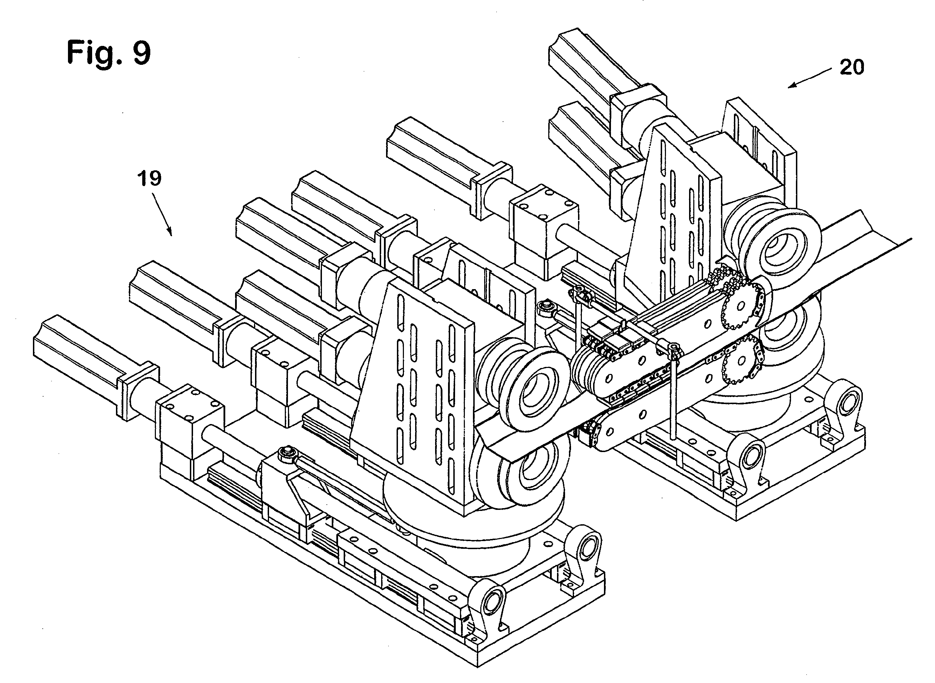

Fig. 9 zeigt schematisch den flexiblen Niederhalter von Fig. 6, wie er in eine Profilieranlage integriert ist. Ein Walzengerüst 19 hält die formenden Rollen 6' und treibt sie ggf. an, und ein Walzengerüst 20 hält die formenden Rollen 6" und treibt sie ggf. an. Zwischen den Walzengerüsten 19 und 20 befindet sich ein nicht gezeichnetes weiteres, grundsätzlich baugleiches Walzengerüst ohne Rollen und einige andere Bauteile, das den flexiblen Niederhalter trägt und antreibt. Stromaufwärts und stromabwärts der Walzengerüste 19 und 20 befinden sich nicht gezeigte weitere Walzengerüste, die Teil einer Profilieranlage sind.

## Patentansprüche

1. Flexibler Niederhalter zum Klemmen eines zu profilierenden Bleches (5), der eine obere Klemmanordnung (10, 10', 10") und eine untere Klemmanordnung (11, 11', 11") umfasst, die das Blech (5) zwischen sich klemmen und in einem Freiheitsgrad beweglich sind, wobei der flexible Niederhalter vor oder hinter einem Walzengerüst (19, 20) einer Profilieranlage zum Walzprofilieren von Kalt- oder Warmprofilen mit veränderlichem Querschnitt angeordnet ist und wobei die Klemmanordnungen über ein oberes Führungselement (14, 14') bzw. ein unteres Führungselement (14, 14') derart beweglich angebracht sind, dass sie sich synchron mit dem Blechvorschub bewegen, um sämtliche Freiheitsgrade bis auf den Freiheitsgrad der Profilierrichtung zu unterbinden;
wobei jede Klemmanordnung eine Vielzahl von Klemmschuhen (12, 12', 12") umfasst, die an einem Endloselement (13) befestigt sind oder ein Glied desselben bilden, wobei das Endloselement (13) von dem jeweiligen Führungselement (14, 14') geführt wird;
**dadurch gekennzeichnet, dass**
jeweils zwei Klemmschuhe (12") bezüglich der Förderrichtung des Endloselementes nebeneinander liegen, dass nebeneinander liegende Klemmschuhe (12") aufeinander zu und voneinander weg beweglich sind, um sich während des Profiliervorgangs in der Breite an das Profil des Bleches (5) anzupassen, und dass erste Mittel (16, 17) zum Bewegen von nebeneinander liegenden Klemmschuhen (12") voneinander weg und aufeinander zu vorgesehen sind.

2. Flexibler Niederhalter nach Anspruch 1, **dadurch gekennzeichnet, dass** das Endloselement eine Rollenkette (13), eine Gleiskette, ein biegsames Band oder ein Endloszahnriemen ist, und wobei das Endloselement der oberen Klemmanordnung (10, 10', 10") gleich oder unterschiedlich ist vom Endloselement der unteren Klemmanordnung (11, 11', 11").

3. Flexibler Niederhalter nach Anspruch 1 oder 2, **dadurch gekennzeichnet, dass** die Führungselemente Gleit-Führungselemente (14, 14') sind oder enthalten.

4. Flexibler Niederhalter nach der vorhergehenden Ansprüche, **dadurch gekennzeichnet, dass** die obere und untere Klemmanordnung (10, 11) passiv mit dem Blechvorschub mitgezogen werden.

5. Flexibler Niederhalter nach der vorhergehenden Ansprüche 1 bis 3, **dadurch gekennzeichnet, dass** eine der Klemmanordnungen (10', 11': 10", 11 ") aktiv angetrieben wird und dass die andere passiv mit dem Blechvorschub mitgezogen wird.

6. Flexibler Niederhalter nach der vorhergehenden Ansprüche 1 bis 3, **dadurch gekennzeichnet, dass** sowohl die obere als auch die untere Klemmanordnung (10', 11': 10", 11 ") aktiv angetrieben wird.

7. Flexibler Niederhalter nach Anspruch 5 oder 6, **dadurch gekennzeichnet, dass** mindestens eines der Führungselemente (14, 14') mindestens ein Kettenrad (15) oder Zahnrad enthält.

8. Flexibler Niederhalter nach Anspruch 7, **dadurch gekennzeichnet, dass** das mindestens eine Kettenrad (15) oder Zahnrad antriebsmäßig mit einem Walzengerüst oder einen im Wesentlichen baugleichen Gerüst, jedoch ohne Walzen, der Profilieranlage verbunden ist.

9. Flexibler Niederhalter nach einem der vorhergehenden Ansprüche, wobei die beiden Klemmanordnungen (10, 11; 10', 11'; 10", 11") das zu profilierende Blech (5) in einer zum Blechvorschub senkrechten Richtung zwischen sich klemmen.

10. Flexibler Niederhalter nach einem der vorhergehenden Ansprüche, der weiterhin zweite Mittel umfasst, um die Klemmschuhe (12, 12', 12") während des Profiliervorgangs in der Breite, Höhe, Form oder Position an das Profil des Bleches anzupassen.

## Claims

1. Flexible hold-down device for clamping a metal sheet (5) to be profiled which comprises an upper clamping arrangement (10, 10', 10'') and a lower clamping arrangement (11, 11', 11'') which clamp the metal sheet (5) between them and are movable in one degree of freedom, wherein the flexible hold-down device is arranged in the front of or behind a roll stand (19, 20) of a profiling installation for roll-forming of cold-rolled or hot-rolled profiles with variable cross-section, and wherein the clamping arrangements are movably mounted via an upper guide element (14, 14') and a lower guide element (14, 14'), respectively, in such a manner that they move synchronously with the advance of the metal sheet to prevent all degrees of freedom except the degree of freedom of the profiling installation,
wherein every clamping arrangement comprises a plurality of clamping shoes (12, 12', 12'') which are fastened to a continuous element (13) or form a member of the same, wherein said continuous element (13) is guided by the respective guide element (14, 14'),
**characterized in that**
two clamping shoes (12'') each are adjacent to each other with respect to the conveying direction of the continuous element, **in that** adjacent clamping shoes (12'') are movable towards each other and away from each other so as to adapt in width to the profile of the metal sheet (5) during the profiling process, and **in that** first means (16, 17) for moving adjacent clamping shoes (12") away from each other and towards each other are provided.

2. Flexible hold-down device according to Claim 1, **characterized in that** the continuous element is a roller chain (13), a crawler chain, a flexible belt or a continuous toothed belt, and where the continuous element of the upper clamping arrangement (10, 10', 10'') is identical with or different from the continuous element of the lower clamping arrangement (11,

3. Flexible hold-down device according to Claim 1 or 2, **characterized in that** the guide elements are or contain gliding guide elements (14, 14').

4. Flexible hold-down device according to the preceding claims, **characterized in that** the upper and the lower clamping arrangement (10, 11) are passively entrained with the sheet-metal feed.

5. Flexible hold-down device according to the preceding claims 1 through 3, **characterized in that** one of the clamping arrangements (10', 11'; 10'', 11'') is actively driven and the other is passively entrained with the sheet-metal feed.

6. Flexible hold-down device according to the preceding claims 1 through 3, **characterized in that** both the upper and the lower clamping arrangement (10', 11'; 10'', 11'') are actively driven.

7. Flexible hold-down device according to Claim 5 or 6, **characterized in that** at least one of the guide elements (14, 14') contains at least one chain wheel (15) or toothed wheel.

8. Flexible hold-down device according to Claim 7, **characterized in that** the at least one chain wheel (15) or toothed wheel is connected, in terms of drive, to a roll-forming stand, or to a stand without rollers, but identical in construction, of the profiling installation.

9. Flexible hold-down device according to one of the preceding claims, with the two clamping arrangements (10, 11; 10', 11'; 10'', 11'') clamping the metal sheet (5) to be profiled between them in a direction vertical to the sheet-metal feed.

10. Flexible hold-down device according to one of the preceding claims, further comprising second means for adapting the clamping shoes (12, 12', 12") in width, height, shape or position to the profile of the metal sheet during the profiling process.

## Revendications

1. Serre-flanc flexible pour serrer une tôle (5) à profiler, qui comprend un agencement de serrage supérieur (10, 10', 10'') et un agencement de serrage inférieur (11, 11', 11'') qui serrent la tôle (5) entre eux et sont mobiles dans un degré de liberté, sachant que le serre-flanc flexible est disposé devant ou derrière un châssis à galets (19, 20) d'une installation de profilage pour le profilage sur galets de profilés à froid ou à chaud à section transversale variable et sachant que les agencements de serrage sont ainsi appliqués de manière mobile via un élément de guidage supérieur (14, 14'), respectivement, un élément de guidage inférieur (14, 14'), qu'ils se déplacent de manière synchrone avec l'avancement de la tôle pour empêcher tout degré de liberté à l'exception du degré de liberté du sens de profilage;
dans lequel chaque agencement de serrage comprend une pluralité de patins de serrage (12, 12', 12'') qui sont fixés sur un élément sans fin (13) ou forment un membre de celui-ci, sachant que l'élément sans fin (13) est dirigé par l'élément de guidage (14, 14') respectif;
**caractérisé en ce que**
respectivement deux patins de serrage (12'') reposent l'un à côté de l'autre par rapport au sens de transport de l'élément sans fin, que les patins de serrage (12'') reposant l'un à côté de l'autre peuvent se déplacer l'un sur l'autre et s'éloigner l'un de l'autre pour s'adapter en largeur au profil de la tôle (5) pendant le profilage, et que des premiers moyens (16, 17) sont prévus pour éloigner l'un de l'autre et déplacer l'un sur l'autre les patins de serrage (12'') reposant l'un à côté de l'autre.

2. Serre-flanc flexible selon la revendication 1, **caractérisé en ce que** l'élément sans fin est une chaîne à rouleaux (13), une chenille, une bande flexible ou une courroie crantée sans fin et dans lequel l'élément sans fin de l'agencement de serrage supérieur (10, 10', 10'') est égal à, ou différent de, l'élément sans fin de l'agencement de serrage inférieur (11, 11', 11").

3. Serre-flanc flexible selon la revendication 1 ou 2, **caractérisé en ce que** les éléments de guidage sont des éléments de guidage à glissement (14, 14') ou en contiennent.

4. Serre-flanc flexible selon les revendications précédentes, **caractérisé en ce que** les agencements de serrage supérieur et inférieur (10, 11) sont entraînées de manière passive avec l'avancement de la tôle.

5. Serre-flanc flexible selon les revendications précédentes 1 à 3, **caractérisé en ce qu'**un des agencements de serrage (10', 11'; 10", 11'') est entraîné de manière active et que l'autre est entraîné de manière passive avec l'avancement de la tôle.

6. Serre-flanc flexible selon les revendications précédentes 1 à 3, **caractérisé en ce que** tant l'agencement de serrage supérieur qu'inférieur (10', 11'; 10'', 11'') est entraîné de manière active.

7. Serre-flanc flexible selon la revendication 5 ou 6, **caractérisé en ce qu'**au moins un des éléments de guidage (14, 14') comporte au moins une roue dentée à chaîne (15) ou une roue crantée.

8. Serre-flanc flexible selon la revendication 7, **caractérisé en ce que** l'au moins une roue dentée à chaîne (15) ou roue crantée est reliée en entraînement à un châssis à galets ou un châssis de construction essentiellement identique, toutefois sans galets, de l'installation de profilage.

9. Serre-flanc flexible selon l'une des revendications précédentes, dans lequel les deux agencements de serrage (10, 11; 10', 11'; 10", 11") serrent entre eux la tôle (5) à profiler dans une direction verticale à l'avancement de la tôle.

10. Serre-flanc flexible selon l'une des revendications précédentes, qui comprend en outre des seconds moyens pour adapter les patins de serrage (12, 12', 12'') en largeur, hauteur, forme ou position, au profil de la tôle pendant le profilage.
